# EUROPÄISCHE PATENTSCHRIFT

(11) **EP 2 494 527 B1**
(45) Veröffentlichungstag und Bekanntmachung des Hinweises auf die Patenterteilung: **08.01.2020**
(21) Anmeldenummer: 10754446.2
(22) Anmeldetag: 01.09.2010
(51) Int. Cl.: B60L 58/16, G07C 5/10, B60L 3/00, B60L 3/12, G07C 5/08, G07C 5/00

(54) **VERFAHREN ZUR SCHNELLEN BESTIMMUNG DES ALTERUNGSZUSTANDES SOWIE EIN ENTSPRECHENDES COMPUTERPROGRAMM UND EIN ENTSPRECHENDES COMPUTERLESBARES SPEICHERMEDIUM**
METHOD FOR QUICKLY DETERMINING A STATE OF AGING AND A RELATED COMPUTER PROGRAM AND A RELATED COMPUTER-READABLE STORAGE MEDIUM
PROCÉDÉ DE DÉTERMINATION RAPIDE DE L'ÉTAT DE VIEILLISSEMENT, PROGRAMME D'ORDINATEUR CORRESPONDANT, ET MILIEU DE MÉMORISATION LISIBLE PAR ORDINATEUR CORRESPONDANT

(30) Priorität: 30.10.2009 DE 102009046210
(43) Veröffentlichungstag der Anmeldung: 05.09.2012
(73) Patentinhaber: Samsung SDI Co., Ltd., Gyeonggi-do (KR); Robert Bosch GmbH, 70442 Stuttgart (DE)
(72) Erfinder: PISCOL, Ralf, 71083 Herrenberg (DE); SCHINDLER, Frank, 72762 Reutlingen (DE)
(74) Vertreter: Bee, Joachim
(86) Internationale Anmeldenummer: PCT/EP2010/062783
(87) Internationale Veröffentlichungsnummer: WO 2011/051027

(56) Entgegenhaltungen:
- EP-A2- 1 770 652
- WO-A1-2008/119444
- GB-A- 2 455 160
- US-A1- 2009 119 038

## Beschreibung

Die Erfindung betrifft ein Verfahren und eine Anordnung zur Datenverwaltung in Fahrzeugen sowie ein entsprechendes Computerprogramm und ein entsprechendes computerlesbares Speichermedium, welche insbesondere einsetzbar sind zur Steuerung oder Regelung von Prozessen, Komponenten und/oder Geräten eines Kraftfahrzeugs mit zeitabhängigen Zuständen, insbesondere von Algorithmen, die empfindlich gegen Echtzeit sind, wie z. B. Algorithmen zur Steuerung oder Regelung chemischer oder elektrochemischer Vorgänge.

Das Verfahren dient zur Verbesserung von Filteralgorithmen für Managementsysteme von Traktionsbatterien durch Einsatz einer Echtszeituhr.

### Stand der Technik

Für die Zustandserkennung und Leistungsprädiktion beispielsweise von Batterien, insbesondere von Traktionsbatterien, kommen Filter und Algorithmen zum Einsatz, deren Parameter mit geeigneten Werten initialisiert werden. Unter einer Traktionsbatterie wird im Folgenden eine Batterie verstanden, welche zum Vortrieb von Fahrzeugen wie Krafträder, Personenkraftwagen oder Lastkraftwagen einsetzbar ist.

Bislang können die Filter und Algorithmen nur grob und ohne Kenntnis des zeitlichen Verlaufs initialisiert werden, da derzeit in Steuergeräten in Fahrzeugen keine Echtzeit und damit keine Echtzeitinformation vorhanden ist.

Ohne Kenntnis der Echtzeit oder zumindest einer kontinuierlich bereitgestellten, absoluten oder relativen, Zeitangabe kann das Managementsystem der Traktionsbatterie nicht unterscheiden, wie lange das Fahrzeug abgeschaltet war. Somit kann das Alter der vor dem Abschalten des Managementsystems dauerhaft abgespeicherten Daten nicht ermittelt und bewertet werden.

Aus der Veröffentlichung US 2009/0119038 A1 ist eine Anordnung zur Erfassung von Batteriedaten eines Kraftfahrzeugs bekannt. Es wird dort vorgeschlagen, erfasste Daten mit einem Zeitstempel zu versehen und für eine Zustandserkennung und Lebensdauervorhersage für die Batterie zu nutzen.

Die europäische Anmeldung EP 1 770 652 A2 betrifft eine Vorrichtung und ein Verfahren zum Sammeln und Speichern von Telematikdaten. Diese Telematikdaten werden mit einem Zeitstempel versehen und in Abhängigkeit eines auslösenden Ereignisses an eine externe Einheit übertragen.

Ein vergleichbares Datenaufzeichnungssystem wird in der internationalen Patentanmeldung WO 2008/119444 A1 beschrieben. Hier erfolgt die Übertragung zum Zweck der Fehlerdiagnose.

### Offenbarung der Erfindung

Die Aufgabe der Erfindung besteht somit darin, ein Verfahren und eine Anordnung zur Datenverwaltung in Fahrzeugen sowie ein entsprechendes Computerprogramm und ein entsprechendes computerlesbares Speichermedium bereitzustellen, welche die Nachteile der bekannten Lösungen beheben.

Diese Aufgabe wird erfindungsgemäß durch die Merkmale in den Ansprüchen 1, 5 und 6 gelöst. Zweckmäßige Ausgestaltungen der Erfindung sind in den Unteransprüchen enthalten.

Ein besonderer Vorteil der Erfindung besteht unter anderem darin, dass Filter und Algorithmen zur Steuerung von zeitabhängigen Prozessen oder Komponenten einer Traktionsbatterie eines Kraftfahrzeugs entsprechend einem zeitabhängigen Status des Prozesses bzw. Zustandes der Traktionsbatterie initialisiert werden können. Dies wird dadurch erreicht, dass bei dem Verfahren zur Datenverwaltung in Fahrzeugen Informationen bereitgestellt werden, die es gestatten, das Alter von Daten, welche während des Betriebes und Standzeiten des Fahrzeuges aufgezeichnet wurden, zu bestimmen. Bei den aufzuzeichnenden Daten handelt es sich beispielsweise um Daten, welche den Status bzw. Zustand eines Prozesses bzw. einer Fahrzeugkomponente oder -moduls beschreiben, wie beispielsweise Temperatur, Spannung, Ladung oder dergleichen. Die Erfindung sieht vor, dass es sich bei dem Fahrzeugmodul um eine Traktionsbatterie handelt, und dass die aufgezeichneten Daten eine Zustandserkennung und/oder eine Leistungsprädiktion der Traktionsbatterie gestatten. Eine bevorzugte Ausführungsform der Erfindung sieht daher vor, dass es sich bei dem Fahrzeug um ein elektrogetriebenes Fahrzeug oder um ein Fahrzeug mit Hybridantrieb handelt.

In der Erfindung ist weiter vorgesehen, dass es sich bei den Informationen, welche es gestatten das Alter der aufgezeichneten Daten zu ermitteln, um Zeitinformationen handelt, welche zusammen mit den aufgezeichneten Daten abgespeichert werden. Die Erfindung sieht vor, dass die Informationen durch einen Takt- oder Zeitgeber bereitgestellt werden, welcher unterbrechungsfrei aktiv ist. Bei einem solchen permanent ablaufenden Takt- oder Zeitgeber kann es sich beispielsweise um eine Uhr, insbesondere um eine Echtzeituhr, handeln. Es werden somit durch den unterbrechungsfrei laufenden Takt- oder Zeitgeber permanent aufeinanderfolgende Zeitinformationen, vorzugsweise Echtzeitinformationen, bereitgestellt. Ein permanent aktiver Taktgeber kann auch beispielsweise in regelmäßigen Abständen Taktsignale geben, welche von einem Algorithmus ausgewertet werden, um aus der Anzahl der Taktsignale die Zeit zu bestimmen, welche von einem vorgebbaren Startpunkt an verstrichen ist. In jedem Fall werden durch den permanent aktiven Takt- oder Zeitgeber Informationen bereitgestellt, aus welchen sich ein zeitlicher Abstand zwischen einem aktuellen, gegenwärtigen Zeitpunkt und dem Zeitpunkt, zu dem Daten oder ein Datensatz abgespeichert wurde, bestimmen läßt. Vorteilhafterweise dienen als Zeitinformationen Echtzeitinformationen.

Aus dem Alter der aufgezeichneten Daten und der Kenntnis der aktuellen Zeit können nun in Abhängigkeit des Alters der aufgezeichneten Daten Prozesse, Filter oder Algorithmen gesteuert und/oder initialisiert werden. Die Erfindung sieht vor, dass in Abhängigkeit des Alters von Datensätzen optimierte Initialisierungswerte für Filter und Algorithmen der Zustandserkennung und der Leistungsprädiktion von Transaktionsbatterien berechnet und verwendet werden. Insbesondere ist vorgesehen, dass unter Einsatz der ununterbrochen ablaufenden Takt- oder Zeitgeber, insbesondere einer Echtzeituhr, präzise Daten zur Diagnose und Fehlererkennung des Traktionsbatteriesystems ermittelt werden, wie z. B.:
- der genaue zeitliche Temperaturverlauf der Traktionsbatterie,
- der genaue zeitliche Spannungsverlauf der Traktionsbatterie und/oder
- der Verlauf der Selbstentladung der Traktionsbatterie.

Eine Anordnung nach der Erfindung weist mindestens einen Chip und/oder Prozessor auf und ist derart eingerichtet, dass ein Verfahren zur Datenverwaltung in Fahrzeugen ausführbar ist, wobei Informationen bereitgestellt werden, anhand derer das Alter von Daten, welche während des Betriebs des Fahrzeugs aufgezeichnet wurden, bestimmbar ist.

In einer bevorzugten Ausführungsform der Erfindung ist die Anordnung mit einem Kraftfahrzeug, vorzugsweise mit einem elektrogetriebenem Kraftfahrzeug, kombiniert bzw. in dieses Fahrzeug integriert. Die Anordnung umfasst einen permanent aktiven Takt- oder Zeitgeber welcher die Informationen bereitstellt, anhand derer das Alter von abgespeicherten Daten/Datensätzen bestimmbar ist.

Ein solcher permanent aktiver Takt- oder Zeitgeber kann beispielsweise in Form eines Halbleiterchips, welcher (in Automotive-Anwendungen) als Echtzeituhr bekannt ist, in Modulen und/oder Geräten eines (elektrogetriebenen) Fahrzeugs verwendet werden. Ein solcher permanent aktiver Takt- oder Zeitgeber, wie z.B. ein Halbleiterchip, müsste dauerhaft mit einer Spannungsversorgung verbunden sein, um den ununterbrochenen Betrieb des Takt- oder Zeitgebers zu gewährleisten.

Ein Computerprogramm zur Datenverwaltung in Fahrzeugen ermöglicht es einer Datenverarbeitungseinrichtung, nachdem das Computerprogramm dem Speichermittel der Datenverarbeitungseinrichtung geladen worden ist, Daten zu verwalten, wobei Informationen bereitgestellt werden, anhand derer das Alter der Daten, welche während des Betriebs des Fahrzeugs aufgezeichnet wurden, bestimmbar ist.

In einer weiteren bevorzugten Ausführungsform der Erfindung ist vorgesehen, dass das erfindungsgemäße Computerprogramm modular aufgebaut ist, wobei einzelne Module auf verschiedenen Datenverarbeitungseinrichtungen installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, freizugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 8 aus einem elektronischen Datennetz, wie beispielsweise aus dem Internet, auf eine an das Datennetz angeschlossene Datenverarbeitungseinrichtung herunter geladen wird.

Eine bevorzugte Ausführungsform des erfindungsgemäßen Computerprogramm sieht vor, dass das Computerprogramm Codesequenzen umfasst, welche (ZeitInformationen von einem ununterbrochen aktiven Takt- oder Zeitgeber, insbesondere von einer Echtzeituhr, abruft oder empfängt.

In einer anderen bevorzugten Ausführungsform des erfindungsgemäßen Computerprogramms ist vorgesehen, dass das Computerprogramm Codesequenzen umfasst, welche bei einem Reset des permanent aktiven Takt- oder Zeitgebers, insbesondere von einer Echtzeituhr, Filter und/oder Algorithmen in einen definierten Anfangszustand setzen bzw. die Auswertung der Zeitinformation unterbinden. Das Rücksetzen der Filter und/oder Algorithmen und/oder das Unterbinden der Auswertung der Zeitinformation kann beispielsweise durch Versenden oder Austausch entsprechender Nachrichten über ein Bussystem des Fahrzeugs erfolgen.

Um das erfindungsgemäße Verfahren zur Datenverwaltung in Fahrzeugen auszuführen, ist vorgesehen, ein computerlesbares Speichermedium einzusetzen, auf dem ein Programm gespeichert ist, dass es einer Datenverarbeitungseinrichtung ermöglicht, nachdem es in den Speicher der Datenverarbeitungseinrichtung geladen worden ist, Daten zu verwalten, wobei Informationen bereitgestellt werden, anhand derer das Alter von Daten, welche während des Betriebs eines Fahrzeugs aufgezeichnet wurden, bestimmbar ist.

Nachfolgend wird die Erfindung anhand eines Ausführungsbeispiels in größerem Detail beschrieben. Obwohl die Erfindung beispielhaft für ein Batteriemanagementsystem einer Traktionsbatterie beschrieben wird, ist die Erfindung nicht auf dieses spezielle Beispiel eingeschränkt, sondern umfasst vielmehr auch andere Verfahren, Anordnungen, Computerprogramme und computerlesbare Speichermedien zur Datenverwaltung, solange diese nur die Merkmale der unabhängigen Ansprüche aufweisen.

Zur Initialisierung von Filtern und Algorithmen einer Traktionsbatterie werden geeignete Werte verwendet, die aus Aufzeichnung von Daten während vergangener Fahrten des Fahrzeugs stammen. Die aus der Aufzeichnung der geeigneten Traktionsbatterieparameter während der Fahrt gewonnenen Filterinitialisierungen werden jedoch nicht als solche interpretiert, sondern unter Berücksichtigung ihres Alters, also der Echtzeit zu der sie gewonnen wurden. In einer beispielhaften Ausführungsform der Erfindung werden die Echtzeitinformationen zusammen mit den geeigneten Daten aufgezeichnet.

So macht es beispielsweise für eine Traktionsbatterie und dadurch für deren Management einen Unterschied ob ein Elektrofahrzeug oder Hybridfahrzeug nach einer zwei Minuten dauernden Unterbrechung weiter betrieben wird, oder nach einer Ruhepause von acht Stunden (typischerweise über Nacht). Nach einer Unterbrechung von zwei Minuten sind die einzelnen Batteriezellen chemisch noch nicht in Ruhe bzw. im chemischen Gleichgewicht. Nach einer Unterbrechung von acht Stunden ist das chemische Gleichgewicht sehr wohl erreicht.

Nach einer kurzen Unterbrechung können die Filter und Algorithmen mit den zum letzten, kurze Zeit zurückliegenden Abschaltzeitpunkt, im nichtflüchtigen Speicher abgelegten Parameter initialisiert werden. Demegenüber sind nach einer langen Unterbrechung des Betriebs andere Parameter als Initialwerte besser geeignet.

Durch Kenntnis des Alters der Datensätze ist es möglich, optimierte Initialisierungswerte für Filter und/oder Algorithmen der Zustandserkennung und/oder Leistungsprädiktion der Traktionsbatterie zu errechnen und zu verwenden. Darüber hinaus können durch den Einsatz einer Echtzeituhr präzise Daten zur Diagnose und Fehlererkennung des Traktionsbatteriesystems ermittelt werden, wie beispielsweise der genaue zeitliche Temperatur- oder Spannungsverlauf oder der genaue zeitliche Verlauf der Selbstentladung der Traktionsbatterie.

Die Erfindung vermeidet somit, dass durch die Annahme, dass sich alle Zellen der Traktionsbatterie zum Zeitpunkt des Wiedereinschaltens nach einer Unterbrechung im chemischen Gleichgewicht befinden, Module und/oder Geräte des Fahrzeugs beschädigt werden. Diese Annahme ist in einem erheblichen Teil der Betriebsfälle nicht korrekt und kann insbesondere zu mangelhafter Batteriezustandserkennung und daraus resultierend zu einer kürzeren Lebensdauer der Traktionsbatterie oder zu einer nicht optimalen Leistungsvorhersage der Traktionsbatterie führen.

Diese Fehlannahme tritt besonders bei Fahrzeugen auf, die zeitlich sehr kurze Fahrzyklen haben, z.B. bei Fahrzeugen, die zur Auslieferung von Postsendungen an Privathaushalte verwendet werden. Diese Fahrzeuge werden vorzugsweise als Hybrid- oder Elektrofahrzeuge eingesetzt, d.h. von einer Traktionsbatterie angetrieben.

Ein wesentlicher Vorteil der Erfindung liegt in der zusätzlichen Erfassung der Echtzeit, zu der ein Satz geeigneter Parameter der Traktionsbatterie ermittelt wurde, und in der nichtflüchtigen Speicherung der Kombination aus geeignetem Datensatz von Traktionsbatterieparametern und der Echtzeit, zu der die Daten erfasst wurden.

Nach Wiederinbetriebnahme des Fahrzeuges nach einer Fahrunterbrechung verfügt das Managementsystem der Traktionsbatterie unter Zuhilfenahme der dann aktuellen Echtzeit über die Information, wie alt die aus dem nichtflüchtigen Speicher verfügbaren Datensätze sind. Mit Kenntnis des Alters der Datensätze lassen sich die Initialisierungswerte für Filter und Algorithmen optimieren bzw. geeignet wählen und damit die Qualität von Zustandserkennung und Leistungsprädiktion der Traktionsbatterie verbessern.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung, dem erfindungsgemäßen Verfahren, dem erfindungsgemäßen Computerprogramm und dem erfindungsgemäßen computerlesbaren Speichermedien auch bei grundsätzlich anders gearteten Ausführungen Gebrauch machen.

## Patentansprüche

1. Verfahren zur Datenverwaltung in einem Fahrzeug mit einer Traktionsbatterie, wobei Informationen durch einen permanent aktiven Takt- oder Zeitgeber bereitgestellt werden, anhand derer das Alter von Traktionsbatteriedatensätzen, welche während des Betriebes des Fahrzeugs aufgezeichnet wurden, bestimmbar ist, wobei es sich bei den aufgezeichneten Traktionsbatteriedatensätzen um Parameter der Traktionsbatterie handelt und wobei aus den Informationen die aktuelle Zeit ermittelt wird, und wobei die Dauer einer Fahrtunterbrechung des Fahrzeugs anhand des Alters der Traktionsbatteriedatensätze und der aktuellen Echtzeit nach Wiederinbetriebnahme ermittelt wird, und wobei optimierte Initialisierungswerte für Filter und/oder Algorithmen der Zustandserkennung und/oder der Leistungsprädiktion der Traktionsbatterie berechnet werden in Abhängigkeit der Dauer der Fahrtunterbrechung und für eine Initialisierung der Filter und/oder Algorithmen der Zustandserkennung und/oder der Leistungsprädiktion der Traktionsbatterie verwendet werden.

2. Verfahren nach Anspruch 1, **dadurch gekennzeichnet, dass** der Zeitgeber absolute Zeitinformationen oder Echtzeitinformationen bereitstellt.

3. Verfahren nach einem der voranstehenden Ansprüche, **dadurch gekennzeichnet, dass** es sich bei den aufgezeichneten Traktionsbatteriedatensätzen um einen zeitlichen Temperaturverlauf, um einen zeitlichen Spannungsverlauf und/oder um einen Verlauf der Selbstentladung der Traktionsbatterie handelt.

4. Verfahren nach einem der voranstehenden Ansprüche, **dadurch gekennzeichnet, dass** in Abhängigkeit des Alters der aufgezeichneten Traktionsbatteriedatensätze Prozesse analysiert, ausgeführt und/oder initialisiert werden.

5. Datenverarbeitungseinrichtung mit mindestens einem Chip und/oder Prozessor, die mit einem permanent aktiven Takt- oder Zeitgeber kombiniert ist, wobei die Anordnung ausgebildet ist, ein Verfahren zur Datenverwaltung gemäß einem der Ansprüche 1 bis 4 auszuführen.

6. Computerprogramm, das es einer Datenverarbeitungseinrichtung ermöglicht, nachdem es in Speichermittel der Datenverarbeitungseinrichtung geladen worden ist, ein Verfahren zur Datenverwaltung gemäß einem der Ansprüche 1 bis 4 durchzuführen.

7. Computerlesbares Speichermedium, auf dem ein Programm nach Anspruch 6 gespeichert ist.

## Claims

1. Method for data management in a vehicle comprising a traction battery, wherein information is provided by a permanently active clock generator or timer, on the basis of which information the age of traction battery data sets which have been recorded during operation of the vehicle can be determined, wherein the recorded traction battery data sets are parameters of the traction battery and wherein the current time is ascertained from the information, and wherein the duration of an interruption in driving of the vehicle is ascertained on the basis of the age of the traction battery data sets and the current real time after restarting, and wherein optimized initialization values for filters and/or algorithms of the state identification and/or the power prediction of the traction battery are calculated depending on the duration of the interruption in driving and are used for initializing the filters and/or algorithms of the state identification and/or the power prediction of the traction battery.

2. Method according to Claim 1, **characterized in that** the timer provides absolute time information or real-time information.

3. Method according to either of the preceding claims, **characterized in that** the recorded traction battery data sets are a temperature profile over time, a voltage profile over time and/or a profile of the self-discharge of the traction battery.

4. Method according to one of the preceding claims, **characterized in that** processes are analysed, executed and/or initialized depending on the age of the recorded traction battery data sets.

5. Data processing device comprising at least one chip and/or processor, which data processing device is combined with a permanently active clock generator or timer, wherein the arrangement is designed to execute a method for data management according to one of Claims 1 to 4.

6. Computer program which allows a data processing device, after it has been loaded into storage means of the data processing device, to execute a method for data management according to one of Claims 1 to 4.

7. Computer-readable storage medium on which a program according to Claim 6 is stored.

## Revendications

1. Procédé de gestion de données dans un véhicule équipé d'une batterie de traction, dans lequel des informations sont fournies par un générateur d'horloge ou un générateur de temporisation actif en permanence, à l'aide desquelles l'âge d'ensembles de données de batterie de traction ayant été enregistrés pendant le fonctionnement du véhicule peut être déterminé, dans lequel les ensembles de données de batterie de traction enregistrés sont des paramètres de la batterie de traction et dans lequel le temps actuel est déterminé à partir desdites informations, et dans lequel la durée d'une interruption du parcours effectué par le véhicule est déterminée sur la base de l'âge des ensembles de données de batterie de traction et du temps réel actuel après redémarrage, et dans lequel des valeurs d'initialisation optimisées pour des filtres et/ou des algorithmes de la détection d'état et/ou de la prédiction de puissance de la batterie de traction sont calculées en fonction de la durée de l'interruption du parcours effectué et sont utilisées pour une initialisation des filtres et/ou des algorithmes de la détection d'état et/ou de la prédiction de puissance de la batterie de traction.

2. Procédé selon la revendication 1, **caractérisé en ce que** le générateur de temporisation fournit des informations de temps absolues ou des informations de temps réel.

3. Procédé selon l'une des revendications précédentes, **caractérisé en ce que** les ensembles de données de batterie de traction enregistrées sont une courbe temporelle de température, une courbe temporelle de tension et/ou une courbe de l'autodécharge de la batterie de traction.

4. Procédé selon l'une des revendications précédentes, **caractérisé en ce que** des processus sont analysés, exécutés et/ou initialisés en fonction de l'âge des ensembles de données de batterie de traction enregistrés.

5. Dispositif de traitement de données comportant au moins une puce et/ou un processeur qui est combiné avec un générateur d'horloge ou un générateur de temporisation actif en permanence,
dans lequel le dispositif est conçu pour mettre en œuvre un procédé de gestion de données selon l'une des revendications 1 à 4.

6. Programme informatique permettant à un dispositif de traitement de données, après chargement dans un moyen de stockage du dispositif de traitement de données, de mettre en œuvre un procédé de gestion de données selon l'une des revendications 1 à 4.

7. Support de stockage lisible par ordinateur sur lequel est stocké un programme selon la revendication 6.
